# EUROPÄISCHE PATENTANMELDUNG

(11) **EP 2 360 197 A1**
(43) Veröffentlichungstag der Anmeldung: **24.08.2011**
(21) Anmeldenummer: 11154056.3
(22) Anmeldetag: 10.02.2011
(51) Int. Cl.: C08G 18/08, C08G 18/48, C08G 18/50, C08G 18/76, C08J 9/00, C08K 5/07, C08G 18/12, C09J 175/04, C08J 9/14, C08K 5/00, C08K 5/524, C08G 101/00

(54) **Lagerstabile Polyisocyanatprepolymere enthaltend Flammschutzmittel**

(30) Priorität: 17.02.2010 EP 10153844
(71) Anmelder: BASF SE, 67056 Ludwigshafen (DE)
(72) Erfinder: Reese, Hans-Jürgen, 49401, Damme (DE); Drogla, Verena, 49448, Lemförde (DE); Ullmann, Stefan, 87656, Germaringen (DE)

(57) **Zusammenfassung**

Die vorliegende Erfindung betrifft eine lagerstabile Polyisocyanatprepolymerzusammensetzung, erhältlich durch Vermischen von a) Polyisocyanaten mit b) Verbindungen mit gegenüber Isocyanaten reaktiven Gruppen, c) Treibmittel, d) Flammschutzmittel, e) Katalysator, f) Chelatbildner und gegebenenfalls g) sonstigen Zusatzstoffen, wobei die Polyisocyanate a) in solchen Mengen eingesetzt werden, dass, bezogen auf die eingesetzten Komponenten, mehr Isocyanatgruppen als gegenüber Isocyanat reaktive Gruppen enthalten sind. Weiter betrifft die vorliegende Erfindung einen Druckbehälter, enthaltend eine lagerstabile Polyisocyanatprepolymerzusammensetzung, und einen Polyurethanschaumstoff, erhältlich durch in Kontakt bringen einer solchen Polyisocyanatprepolymerzusammensetzung mit Wasser.

## Beschreibung

Die vorliegende Erfindung betrifft eine lagerstabile Polyisocyanatprepolymerzusammensetzung, erhältlich durch Vermischen von a) Polyisocyanaten mit b) Verbindungen mit gegenüber Isocyanaten reaktiven Gruppen, c) Treibmittel, d) Flammschutzmittel, e) Katalysator, f) Chelatbildner und gegebenenfalls g) sonstigen Zusatzstoffen, wobei die Polyisocyanate a) in solchen Mengen eingesetzt werden, dass, bezogen auf die eingesetzten Komponenten, mehr Isocyanatgruppen als gegenüber Isocyanat reaktive Gruppen enthalten sind. Weiter betrifft die vorliegende Erfindung einen Druckbehälter, enthaltend eine lagerstabile Polyisocyanatprepolymerzusammensetzung, und einen Polyurethanschaumstoff, erhältlich durch in Kontakt bringen einer solchen Polyisocyanatprepolymerzusammensetzung mit Wasser.

Polyisocyanatprepolymerzusammensetzungen werden häufig als Einkomponenten-Polyurethanschäume oder Einkomponenten Polyurethanklebstoffe aus Druckbehältern eingesetzt. Diese werden erhalten durch Vermischen von Polyisocyanaten mit Verbindungen mit gegenüber Isocyanaten reaktiven Gruppen, Treibmittel, Flammschutzmittel, Katalysatoren und gegebenenfalls sonstigen Zusatzstoffen, wobei die Polyisocyanate a) im Überschuss eingesetzt werden. Diese sind im Bereich des Bauwesens häufig angewandte Montagemittel zum Einbau von Fenstern und Türen in Bauwerken sowie als Füllmaterial für bautechnisch bedingte Hohlräume oder Mauerdurchbrüche für Rohrinstallationen. Durch Austragen des Inhaltes mittels Treibmittel und dem anschließenden Aufschäumen und Aushärten mit Luftfeuchtigkeit entsteht der gewünschte Schaum. Je nach Zusammensetzung des Prepolymers sowie dem Vorhandensein bestimmter Zusätze ergeben sich harte bis weichelastische Schaumstoffe. Werden bestimmte schaumregulierende Zusatzstoffe mit in die Aerosoldose gegeben, kollabiert der ausgetragene Schaum und kann als Klebstoff eingesetzt werden. Hauptsächlich werden diese Schäume als Montageschaum eingesetzt. Ein großer Vorteil solcher Montageschäume ist deren einfache Handhabbarkeit. Die Herstellung der Einkomponenten-Dosenschäume erfolgt dabei durch Zugabe einer Isocyanatkomponente und eine Polyolkomponente in die Aerosoldose, wobei sich meist innerhalb von wenigen Tagen das verwendbare Isocyanatprepolymer in der Aerosoldose bildet. Solche Montageschäume oder Klebstoffe sind beispielsweise in DE 10311607, in EP 1518874, in EP 1674492, in WO 2005054324 und WO 2009071470 beschrieben.

Als Treibmittel werden häufig halogenierte Kohlenwasserstoffe, beispielsweise Dichlorfluormethan, Monofluortrichlormethan, Trifluortrichlorethan und/oder teilhalogenierte Kohlenwasserstoffe wie beispielsweise Trifluormethan, 1,1-Dichlor-1-fluorethan, Monochlortetrafluorethan, Monochlortrifluorethan, Monochlordifluorethan, Difluorethan, Dichlordifluorethan, Pentafluorethan, Tetrafluorethan und Dichlormonofluorethan eingesetzt, da diese Treibmittel nicht brennbar sind. Halogenierte Treibmittel sind aber umweltschädlich und schädigen beispielsweise die Ozonschicht und tragen zur Klimaerwärmung bei. Es bestehen daher Bestrebungen, halogenierte Kohlenwasserstoffe durch andere Treibmittel zu ersetzen, die weniger umweltschädlich sind. Aus diesem Grund werden meist Alkane oder Cycloalkane als Treibmittel eingesetzt, da diese einfach zu handhaben sind, sich gut im Polyisocyanatprepolymer lösen und kostengünstig sind. Nachteilig an Alkanen als Treibmittel ist, dass diese brennbar sind.

Besonders bei Bauanwendungen ist es aber wichtig, dass der Polyurethanschaumstoff bzw. der Polyurethanklebstoff flammgeschützt ist. Damit trotz Verwendung der brennbaren Treibmittel der resultierende Schaum oder Klebstoff flammgeschützt ist, werden Flammschutzmittel zugegeben. Vorzugsweise erfüllen die aus Druckbehälter erhaltenen Polyurethanschaumstoffe die Erfordernisse des Brandschutzes gemessen nach DIN 4102. Um diese Erfordernisse zu erfüllen sind Flammschutzmittel, insbesondere OH-funktionalisierte Flammschutzmittel, in einer Konzentration von üblicherweise größer 10 Gew. %, bezogen auf das Gesamtgewicht der im Polyurethanschaumstoff enthaltenen polyolischen Bestandteile, notwendig. Dies führt aber häufig zu Problemen mit der Lagerstabilität der Polyisocyanatprepolymere. So werden diese mit der Zeit, beispielsweise nach sechs Monaten, immer hochviskoser und sind teilweise nicht mehr verwendbar.

Aufgabe der vorliegenden Erfindung war es daher eine flammgeschützte, lagerstabile Polyisocyanatprepolymerzusammensetzung zu liefern.

Die erfindungsgemäße Aufgabe wird gelöst durch eine lagerstabile Polyisocyanatprepolymerzusammensetzung, erhältlich durch Vermischen von a) Polyisocyanaten mit b) Verbindungen mit gegenüber Isocyanaten reaktiven Gruppen, c) Treibmittel, d) Flammschutzmittel, e) Katalysator, f) Chelatbildner und gegebenenfalls g) sonstigen Zusatzstoffen, wobei die Polyisocyanate a) in solchen Mengen eingesetzt werden, dass, bezogen auf die eingesetzten Komponenten, mehr Isocyanatgruppen als gegenüber Isocyanat reaktive Gruppen enthalten sind.

Als Polyisocyanate kommen beispielsweise aliphatische, cycloaliphatische und insbesondere aromatische Di- oder Polyisocyanate in Betracht. Im einzelnen seien beispielhaft genannt: aliphatische Diisocyanate, wie Hexamethylen-diisocyanat-1,6, 2-Methylpentamethylen-diisocyanat-1,5, 2-Ethyl-butylen-diisocyanat-1,4 oder Mischungen aus mindestens 2 der genannten C6-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4-Cyclohexandiisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 1,5-Naphtylen-diisocyanat (1,5-NDI), 2,4- und 2,6-Toluylen-diisocyanat (TDI) sowie deren Gemische, 2,4'-, 2,2'-, und vorzugsweise 4,4'-Diphenylmethandiisocyanat (MDI) sowie Mischungen aus mindestens zwei dieser Isomere, Polyphenyl-polymethylenpolyisocyanate (Polymer-MDI, PMDI) mit zwei oder mehr aromatischen Systemen, Mischungen aus PMDI und Toluylen-Diisocyanaten, Polyphenyl-Polyisocyanate, urethanmodifizierte flüssige 4,4'- und/oder 2,4-Diphenylmethandiisocyanate und 4,4'-Diisocyanato-diphenylethan-(1,2).

Gegebenenfalls können als Polyisocyanate a) auch monomerarme Isocyanate, wie beispielsweise in EP 1 518 874, WO 2005/054324 oder DE 103 11 607 beschrieben, eingesetzt werden.

Insbesondere wird als Polyisocyanat a) ein PMDI, vorzugsweise mit einer Viskosität bei 25 °C von kleiner 600 mPas, weiter bevorzugt von 100 bis 400 mPas und besonders bevorzugt von 150 bis 300 mPas, eingesetzt. Insbesondere wird ein Roh-MDI, enthaltend 35 ± 17 Gew.-%, 2-Kern MDI, 26 ± 6 Gew.-% 3-Kern MDI, 12 ± 4 Gew.-% 4-Kern MDI, 5 ± 3 Gew.-% 5-Kern MDI und 23 ±10 Gew.-% 6- und höherkerniges MDI eingesetzt.

Als höhermolekularen Verbindungen mit gegenüber Isocyanat reaktiven Gruppen b) können übliche Verbindungen mit gegenüber Isocyanat reaktiven Gruppen eingesetzt werden. Vorzugsweise werden Polyetherole und/oder Polyesterole, insbesondere ausschließlich Polyetherole verwendet.

Erfindungsgemäße Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 4 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2, 3 und 4-wertige, bevorzugt 3-wertige Alkohole, wie Glycerin, Trimethylolpropan, Ethanolamin, Diethanolamin, Triethanolamin sowie andere dreiwertige Alkohole oder Amine mit drei aktiven Wasserstoffatomen in Betracht.

Die Polyetherpolyole, vorzugsweise Polyoxypropylen-polyoxyethylen-polyole, besitzen eine Funktionalität von 2 bis 4, vorzugsweise 2,5 bis 3,5 und besonders bevorzugt 2,6 bis 3,4 und zahlenmittlere Molekulargewichte von vorzugsweise 600 bis 8.000, besonders bevorzugt vorzugsweise von 1.000 bis 6.000 und insbesondere von 1000 bis 4000 g/mol.

Vorzugsweise wird als höhermolekulare Verbindungen mit gegenüber Isocyanat reaktiven Gruppen b) ein Gemisch aus einem trifunktionell gestartetem Polyetherol mit einem zahlenmittleren Molekulargewicht von 4000 ± 2000 g/mol (b1), einem trifunktionell gestartetem Polyetherol mir einem Molekulargewicht von 1000 ± 200 g/mol (b2) und einem difunktionell gestartetem Polyetherol mit einem zahlenmittleren Molekulargewicht von 600 ± 100 g/mol (b3). Besonders bevorzugt wird als trifunktionell gestartetes Polyetherol (b1) ein Glycerin gestartetes Polyetherol auf Basis von Propylenoxid und Ethylenoxid, als trifunktionell gestartetes Polyetherol (b2) ein Glycerin gestartetes Polyetherol auf Basis von Propylenoxid und Ethylenoxid und als difunktionell gestartetes Polyetherol (b3) ein Ethylenglycol gestartetes Polyetherol auf Basis von Ethylenoxid eingesetzt. Dabei beträgt das Gewichtsverhältnis von (b1) : (b2) : (b3) vorzugsweise 4 ± 1:8 ± 2: 1 ± 0,5.

Weiter kann die höhermolekulare Verbindungen mit gegenüber Isocyanat reaktiven Gruppen b) neben den genannten Polyolen weitere übliche hydroxyfunktionellen Verbindungen, z. B. kurzkettige Diole, wie Ethylenglykol, Propylenglykol, Butandiol-1,4 als Kettenverlängerer, kurzkettige mindestens dreifunktionelle Alkohole wie Glyzerin oder Trimethylolpropan als Vernetzer und/oder Monoole als Molekulargewichtsregler enthalten. Vorzugsweise sind keine Kettenverlängerer, Vernetzer oder Molekulargewichtsregler enthalten.

Als Treibmittel c) können allgemein bekannte Treibmittel, wie z. B. Stoffe, die einen Siedepunkt unter Normaldruck im Bereich von -40 °C bis 120 °C besitzen, Gase und/oder flüssige Treibmittel eingesetzt werden, beispielsweise Kohlendioxid, Alkane und oder Cycloalkane wie Isobutan, Propan, n- oder iso- Butan, Pentan und Cyclopentan, Ether wie Diethylether, Methylisobutylether und Dimethylether, Stickstoff, Sauerstoff, Helium, Argon, Lachgas, halogenierte Kohlenwasserstoffe, beispielsweise Dichlorfluormethan, Monofluortrichlormethan, Trifluortrichlorethan und/oder teilhalogenierte Kohlenwasserstoffe wie beispielsweise Trifluormethan, 1,1-Dichlor-1-fluorethan, Monochlortetrafluorethan, Monochlortrifluorethan, Monochlordifluorethan, Difluorethan, Dichlordifluorethan, Pentafluorethan, Tetrafluorethan, Dichlormonofluorethan oder Mischungen, die mindestens zwei der beispielhaft genannten Treibmittel enthalten. Vorzugsweise enthalten die Treibmittel c) weniger als 50 Gew.-%, besonders bevorzugt weniger als 10 Gew.-%, ganz besonders bevorzugt weniger als 5 Gew.-% und insbesondere weniger als 0,1 Gew.-%, jeweils bezogen auf das Gesamtgewicht der Komponente c), halogenierte Kohlenwasserstoffe. Besonders bevorzugt werden Alkane und/oder Cycloalkane wie Isobutan, Propan, n- oder iso- Butan, Pentan und Cyclopentan, Ether wie Diethylether, Methylisobutylether und Dimethylether und Ether als Treibmittel c) eingesetzt.

Das Treibmittel wird üblicherweise in einer Menge von 0,5 bis 40 Gew.-%, bevorzugt 10 bis 32 Gew.-% bezogen auf das Gewicht der Komponenten a) bis f) zugegeben.

Als Flammschutzmittel d) können im Allgemeinen die aus dem Stand der Technik bekannten Flammschutzmittel verwendet werden. Diese umfassen OH-funktionalisierte, halogenierte Kohlenwasserstoffe, wie halogenierte Mono- und Polyole. Als halogenierte Polyole können dabei alle unter b) beschriebenen Polyole eingesetzt werden, wobei mindestens ein Wasserstoffatom im Molekül durch ein Halogenatom ersetzt wurde. Beispielsweise können als halogenierte Polyole halogenierte Poyether, wie bromierte Ether (Ixol B 251) und PHT-4-Diol verwendet werden. Als halogenierte Monoole können beispielsweise bromierte Alkohole, wie Dibromneopentylakohol und Tribromneopentylalkohol eingesetzt werden. Weitere übliche Flammschutzmittel umfassen chlorierte Phosphate, wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat. Diese Flammschutzmittel können jeweils einzeln oder in Mischungen eingesetzt werden.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke, zum Flammfestmachen der erfindungsgemäß hergestellten Polyurethan-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Vorzugsweise werden als Flammschutzmittel, einzeln oder in Mischungen, solche Verbindungen eingesetzt, die gegenüber Isocyanaten reaktive Gruppen aufweisen, wie OH-funktionalisierte, halogenierte Kohlenwasserstoffe. Besonders bevorzugt sind bromierte Polyetherole mit einem Molekulargewicht von vorzugsweise 350 bis 1000, ganz besonders bevorzugt 400 bis 600 g/mol und einer Funktionalität von vorzugsweise 2 bis 4. Insbesondere wird als bromierte Polyetherpolyol ein difunktionell und/oder ein trifunktionell gestartetes Polyol auf Basis von Ephichlorhydrin eingesetzt, welches bromiert und enthydrochloriert wurde. Geeignete bromierte Polyetherole sind beispielsweise unter dem Handelsnamen IXOL® von der Firma Solvay erhältlich. Insbesondere können als bromierte Polyetherole IXOL® M125 und IXOL® B 251 eingesetzt werden.

Der Anteil Flammschutzmittel an den Komponenten b) bis f) beträgt vorzugsweise mehr als 10 Gew.-%, besonders bevorzugt 15 bis 80 Gew.-% und insbesondere 20 bis 70 Gew.-%, bezogen auf das Gesamtgewicht der Komponenten b) bis f).

Als Katalysatoren e), welche insbesondere die Reaktion zwischen den NCO-Gruppen der Diisocyanate und den Hydroxylgruppen der Polyalkohole beschleunigen, können die nach dem Stand der Technik bekannten und üblichen stark basischen Amide wie beispielsweise 2,3-Dimethyl-3,4,5,6-tetrahydropyrimidin, Tris-(dialkylaminoalkyl)-s-hexahydrotriazine, wie z. B. Tris-(N,N-dimethylaminopropyl)-s-hexahydrotriazin und bevorzugt die üblichen tertiären Amine, wie z. B. Triethylamin, Tributylamin, Dimethylbenzylamin, N-Ethyl-, N-Methyl-, n-Cyclohexylmorpholin, Dimethylcyclohexylamin, Dimorpholinodiethylether, 2-(Dimethylaminoethoxy)-ethanol, 1,4-Diaza-bicyclo-(2,2,2)-octan, 1-Aza-bicyclo-(3,3,0)-octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol, Di-(4-N,N-dimethylaminocyclohexyl)-methan und ähnliche sowie organische Metallverbindungen wie Titansäureester, Eisenverbindungen wie z. B. Eisen-(III)-acetylacetonat, Zinnverbindungen, z. B. Zinn-(II)-Salze von organischen Carbonsäuren, beispielsweise Zinn-(11)-diacetat, das Zinn-(II)-Salz der 2-Ethylhexansäure (Zinn-(II)-octoat), Zinn-(II)-dilaurat oder die Dialkylzinn-(IV)- Salze von organischen Carbonsäuren, wie z. B. Dibutylzinn-(IV)- diacetat, Dibutylzinn-(IV)-dilaurat, Dibutylzinn-(IV)-maleat oder Dioktylzinn-(IV)-diacetat oder ähnliche sowie Di-butylzinn-(IV)- dimercaptid oder Gemische mit mindestens zwei der genannten Katalysatoren sowie synergistisch wirkende Kombinationen aus stark basischen Aminen und organischen Metallverbindungen eingesetzt werden. Besonders bevorzugt wird als Katalysator e) Dimorpholindietylether eingesetzt. Die Katalysatoren e) können in üblichen Mengen, beispielsweise 0,002 bis 5 Gew.-%, bezogen auf die höhermolekularen Verbindungen mit gegenüber Isocyanat reaktiven Gruppen b), verwendet werden.

Chelatbildner f) sind dabei Stoffe, die in der Lage sind, mit Metallionen cyclische Verbindungen zu bilden, wobei diese Gruppierungen mit einsamen Elektronenpaaren oder mit Elektronenlücken enthalten, die an der Ringbildung beteiligt sind. Dabei weist ein Chelatbildner mindestens zwei Koordinationsstellen für das Metallion auf. Chelate sind besonders stabil, wenn sich Fünf- oder Sechsringe ausbilden. Bevorzugte Beispiele für Chelatbildner sind Ethylendiamintetraessigsäure, Nitrilotriessigsäure, α-β Hydroxycarbonylverbindungen, β-Ketoester, β-Hydrochinone β-Hydrochinoline und/oder β-Diketone. Besonders bevorzugte Chelatbildner β-Ketoester, β-Hydrochinone, β-Hydrochinoline und/oder β-Diketone, insbesondere werden β-Diketone, wie Acetylaceton als Chelatbildner eingesetzt.

Der Anteil der Chelatbildner f) beträgt vorzugsweise 0,0001 bis 0,1 besonders bevorzugt 0,001 bis 0,05 und insbesondere 0,005 bis 0,05 Gew.-%, bezogen auf das Gesamtgewicht der Komponenten b) bis f).

Der Zusatz der ausgewählten Chelatbildner erfolgt vorzugsweise zu den polyolischen Bestandteilen des zum Polyisocyanatprepolymeren reagierenden Gemisches, das heißt den Komponenten (b) und/oder, falls OH-funktionalisierte halogenierte Flammschutzmittel eingesetzt werden, (d) und besonders bevorzugt zu den OHfunktionalisierten Flammschutzmitteln. Alternativ kann der jeweils gewählte Chelatbildner in einer bevorzugten Variante auch dem genannten Polyisocyanat a) oder dem fertigen Prepolymeren zugesetzt werden.

Als Hilfs- und Zusatzstoffe g) können beispielsweise Füllstoffe, Keimbildungsmittel, Oxidationsverzögerer, Farbstoffe und Pigmente, Inhibitoren, Stabilisatoren gegen Hydrolyse, Licht, Hitze oder Verfärbung, anorganische und/oder organische Füllstoffe, Verstärkungsmittel und/oder Weichmacher verwendet werden.

Soll die erfindungsgemäße Polyisocyanatprepolymerzusammensetzung als Einkomponenten-Klebstoff eingesetzt werden, enthält die Polyisocyanatprepolymerzusammensetzung des Weiteren schaumregulierende Zusatztzoffe. Vorzugsweise enthalten diese schaumregulierenden Zusatztzoffe Siliconöl. Dabei werden vorzugsweise Dimethylsiloxane mit einer Viskosität von 10 bis 1000 mPas eingesetzt. Neben Siliconöl kann der schaumregulierende Zusatzstoff weitere, übliche Schaumstabilisatoren und/oder Paraffinöl enthalten. Als Paraffinöl werden vorzugsweise gesättigte, aliphatische Kohlenwasserstoffe eingesetzt. Vorzugsweise sind die eingesetzten Paraffinöle bei 25 °C flüssig. Als Schaumstabilisatoren können beispielsweise Polyalkylenglykolpolysiloxan-Copolymere bevorzugt solche Produkte der Firma Goldschmidt unter der Handelsbezeichnung "Tegostab®" und besonders bevorzugt Tegostab® B2219 bzw. Tegostab® BF2270 eingesetzt werden.

Nähere Angaben über die oben genannten Hilfsmittel- und Zusatzstoffe sind der Fachliteratur, beispielsweise der Monographie von J. H. Saunders und K. C. Frisch "High Polymers", Band XVI, Polyurethane, Teil 1 und 2, Verlag Interscience Publishers 1962 bzw. 1964, dem "Kunststoff-Handbuch", Band 7, Polyurethane, 3. Auflage, 1993, herausgegeben von G. Oertel, Carl-Hanser-Verlag, München oder der DE 29 01 774 zu entnehmen.

Zur Herstellung der erfindungsgemäßen Polyisocyanatprepolymerzusammensetzung werden vorzugsweise Polyisocyanate a) mit Verbindungen mit gegenüber Isocyanat reaktiven Gruppen b), Treibmitteln c), Flammschutzmittel d), Katalysator e), Chelatbildner f) und gegebenenfalls sonstigen Zusatzstoffen g) in einen Behälter gegeben, der Behälter verschlossen und die Komponenten a) bis g) homogenisiert, wobei, bezogen auf die eingesetzten Komponenten, mehr Isocyanatgruppen als gegenüber Isocyanat reaktive Gruppen enthalten sind.

Dabei werden besonders bevorzugt die Komponenten a) bis g) jeweils getrennt in den Druckbehälter gegeben, anschließend wird der Druckbehälter verschlossen und der Inhalt wird, beispielsweise durch schütteln, homogenisiert. Alternativ kann die Umsetzung von Polyisocyanat a) mit Verbindungen mit gegenüber Isocyanat reaktiven Gruppen b) und gegebenenfalls Katalysatoren e) auch außerhalb des Druckbehälters erfolgen. Das so erhaltene Umsetzungsprodukt wird dann zusammen mit den verbleibenden Komponenten in den Druckbehälter gegeben.

Gegenstand der vorliegenden Erfindung ist auch ein Druckbehälter, enthaltend eine erfindungsgemäße, lagerstabile Polyisocyanatprepolymerzusammensetzung.

Werden die Polyisocyanatprepolymerzusammensetzungen aus dem Druckbehälter ausgetragen bildet sich ein flammgeschützter Polyurethanschaumstoff oder Polyurethan-Klebstoff, der unter Einwirkung von Feuchtigkeit, meist Luftfeuchtigkeit, aushärtet. Dabei ist ein solcher Polyurethanschaumstoff oder Polyurethanklebstoff ein weiterer Gegenstand der Erfindung. Vorzugsweise weist der erfindungsgemäße Polyurethanschaumstoff bzw. der erfindungsgemäße Polyurethanklebstoff eine Flammfestigkeit bei einer Flammschutzprüfung nach DIN 4102 eine Flammhöhe von weniger als 15 cm, bevorzugt weniger als 13 cm und insbesondere von weniger als 11 cm auf.

Dabei weist die erfindungsgemäße Polyisocyanatprepolymerzusammensetzung eine ausgezeichnete Lagerstabilität auf und ist auch nach mehr als neun Monaten Lagerung bei 25 °C noch uneingeschränkt verwendbar.

Im Folgenden soll die Erfindung anhand von Beispielen verdeutlicht werden.

### Beispiel:

### Herstellung der Polyolkomponente:

Aus 100g eines bromierten Polyethertriols mit der OH-Zahl = 330 mgKOH/g, 164g eines Polyether-triols auf Basis Glyzerin/Porpylenoxyd/Ethylenoxyd mit der OH-Zahl = 42 mgKOH/g, 180g eines bromierten Polyetherdiols mit der OH-Zahl = 240 mgKOH/g, 80g eines Polyethertriols auf Basis Glyzerin/Propylenoxyd/Ethylenoxyd mit der OH-Zahl = 155 mgKOH/g, 25g eines Polyethylenglykols mit der OH-Zahl = 190 mgKOH/g, 25g eines Schaumstabilisators Handelsname Tegostab^{®} B 2219, 0,3 g Siliconöl Handelsname Baysilone^{®} M100, 20 g eines monofunktionellen Polyethylenglykol mit der OH-Zahl = 113 mgKOH/g (Handelsname Pluriol^{®} A 500 E), 6 g 2,2-Dimorpholinodiethylether und 400 g Tris-(2-chlorisopropyl)phosphat wird durch intensives vermischen eine Polyolkomponente hergestellt.

Zu dieser Komponente werden 0,2 g Acetylaceton zugefügt und vermischt.

### Verwendete Isocyanatkomponente:

Als Isocyanatkomponente wird ein Polyphenylenpolymethylenpolyisocyanat mit dem Handelsnamen Lupranat^{®} M20 verwendet.

Beurteilung der Erzielbarkeit an Lagerstabilität daraus gefertigter 1-Komponenten-PU R-Aerosolschäume:

### A) Reaktionsverhalten

Neben der direkten Abfüllung der PUR-Komponenten und Treibgase in entsprechende Aerosolbehälter und Beurteilung der Viskosität nach Lagerdauer, gilt das Reaktionsverhalten des Reaktionsgemisches als Indiz und Nachweis erzielbarer Lagerstabilität, da ein weiterer Anstieg der Reaktionstemperatur das Vorhandensein von Nebenreaktionen anzeigt, die zu höhermolekularen Produkten führen.

### Aufnahme der Reaktionskurven:

Polyol- und Isocyanatkomponente werden auf 25°C temperiert.
100g der Polyolkomponente werden mit 30g Isocyanatkomponente in einem Becher vermischt und nachfolgend sofort in einem isolierenden Behälter positioniert.
Eine Temperaturmesssonde wird in das Reaktionsgemisch eingeführt und der Temperaturverlauf wird über die Zeit gemessen. (siehe Tabelle1)

### B) Fertigung des 1-Komponenten-PUR-Aerosolschaumes

275g der Polyolkomponente werden in eine 1-Liter-Aerosoldose eingefüllt. Dazu werden 380g der Isocyanatkomponente zudosiert und die Aerosoldose mit einem Ventil verschlossen. Durch das Vertil werden nachfolgend 54g Dimethylether dosiert und der Inhalt durch intensives Schütteln homogenisiert. Nachfolgend werden noch 80g eines Propan/Butan-Gemisches (mit 4,2bar Eigendruck bei 25°C) durch das Ventil in die Aerosoldose dosiert und der Inhalt noch mal durch Schütteln homogenisiert.
Mit exothermer Reaktion setzt die Prepolymersynthese in der Aerosoldose ein.

### Beurteilung auf Lagerstabilität:

Die so gefertigte Aerosoldose wird zur Feststellung der Lagerstabilität des darin befindlichen Prepolymers einer Wärmelagerung bei ca. 50°C unterzogen, wobei zur Bestimmung der Lagerstabilität die Aerosoldose in Zeitabständen aus dem Wärmeschrank entnommen, auf Raumtemperatur abgekühlt und nachher auf die Schüttelfähigkeit des Aerosoldoseninhaltes geprüft wird. Eine Lagerstabilität gilt als gewährleistet, wenn sich der Inhalt auch nach 6 Wochen problemlos schütteln lässt.

Die Wärmelagerung gilt als Zeitraffer-Methode und bedeutet bei 6 Wochen Lagerung bei 50°C etwa einer Lagerstabilität von 1Jahr unter Normalbedingungen.

Die Aerosoldose nach Ausführungsbeispiel war auch nach 6 Wochen Wärmelagerung problemlos schüttelbar, das heißt, der Inhalt floss beim Schütteln fühlbar in der Aerosoldose umher.

### Vergleichsbeispiel:

### A) Reaktionsverhalten

Es wird wie im Patentbeispiel beschrieben verfahren, jedoch ohne den Zusatz von Acetylaceton zur Polyolkomponente. Auch hier wird der Temperaturverlauf über die Zeit gemessen. (siehe Tabelle1)

### B) Fertigung des 1-Komponenten-PUR-Aerosolschaumes

Es wird wie im Patentbeispiel beschrieben verfahren, jedoch ohne den Zusatz von Acetylaceton zur Polyolkomponente. Auch hier wird die Lagerstabilität anhand der Schüttelfähigkeit des Aerosoldoseninhaltes nach Wärmelagerung ermittelt.

Im Gegensatz zum Patentbeispiel ist hier der Inhalt bereits nach 3 Wochen Wärmelagerung so hochviskos, dass beim Schütteln kein fühlbares Fließen des Inhalts der Aerosoldose mehr zu spüren war.

### Reaktionsverläufe (vergleichend)

**Tabelle1:**

| Zeit nach Vermischung der Komponenten in [min] | Patentbeispiel Temperatur des Reaktionsgemisches in [°C] | Vergleichsbeispiel Temperatur des Reaktionsgemisches in [°C] |
|---|---|---|
| 1 | 25 | 25 |
| 2 | 28 | 27 |
| 3 | 30 | 29 |
| 4 | 32 | 31 |
| 5 | 35 | 34 |
| 6 | 37 | 36 |
| 7 | 40 | 38 |
| 8 | 41 | 40 |
| 9 | 43 | 42 |
| 10 | 45 | 44 |
| 11 | 46 | 45 |
| 12 | 48 | 47 |
| 13 | 50 | 48 |
| 14 | 51 | 50 |
| 15 | 53 | 52 |
| 16 | 55 | 53 |
| 17 | 56 | 54 |
| 18 | 57 | 56 |
| 19 | 58 | 58 |
| 20 | 58 | 62 |
| 21 | 59 | 64 |
| 22 | 60 | 68 |
| 23 | 61 | 70 |
| 24 | 61 | 74 |
| 25 | 61 | 78 |
| 26 | 61 | 80 |
| 27 | 60 | 81 |
| 28 | 60 | 81 |

Aus dem Verlauf der Temperaturentwicklung ist ersichtlich, dass nach Patentbeispiel eine regulierte Umsetzungsreaktion abläuft, die im Vergleichsbeispiel dagegen durch weitergehende Nebenreaktionen zu einer um ca. 20°C höhere Reaktionstemperatur führt.

Durch diese regulierte, weitestgehend Nebenreaktionen ausschließende, Umsetzungsreaktion nach erfindungsgemäßer Lehre (siehe Patentbeispiel) erhält man lagerstabile Polyisocyanatprepolymere mit erhöhten Anteil an Flammschutzmitteln insbesondere OH-funktionalisierte Flammschutzmittel, die sich aus Druckbehältern zu Einkomponenten-Polyurethanschäumen oder Einkomponenten-Polyurethanklebstoffen verarbeiten lassen.

## Patentansprüche

1. Lagerstabile Polyisocyanatprepolymerzusammensetzung, erhältlich durch Vermischen von
a) Polyisocyanaten mit,
b) Verbindungen mit gegenüber Isocyanaten reaktiven Gruppen,
c) Treibmittel,
d) Flammschutzmittel,
e) Katalysatoren
f) Chelatbildner und gegebenenfalls
g) sonstigen Zusatzstoffen,
wobei die Polyisocyanate a) in solchen Mengen eingesetzt werden, dass, bezogen auf die eingesetzten Komponenten, mehr Isocyanatgruppen als gegenüber Isocyanat reaktive Gruppen enthalten sind.

2. Lagerstabile Polyisocyanatprepolymerzusammensetzung nach Anspruch 1, **dadurch gekennzeichnet, dass** als Chelatbildner α-β Hydroxycarbonylverbindungen, β-Ketoester, β-Hydrochinone, β-Hydrochinoline und/oder β-Diketone eingesetzt werden.

3. Lagerstabile Polyisocyanatprepolymerzusammensetzung nach Anspruch 2, **dadurch gekennzeichnet, dass** als Chelatbildner Acetylaceton eingesetzt wird.

4. Lagerstabile Polyisocyanatprepolymerzusammensetzung nach einem der Ansprüche 1 bis 3, **dadurch gekennzeichnet, dass** als Flammschutzmittel OH-funktionalisierte, halogenierte Kohlenwasserstoffe eingesetzt werden.

5. Lagerstabile Polyisocyanatprepolymerzusammensetzung nach einem der Ansprüche 1 bis 4, **dadurch gekennzeichnet, dass** das Treibmittel c) weniger als 10 Gew.-%, bezogen auf das Gesamtgewicht der Treibmittel c), halogenierte Kohlenwasserstoffe enthalt.

6. Lagerstabile Polyisocyanatprepolymerzusammensetzung nach einem der Ansprüche 1 bis 5, **dadurch gekennzeichnet, dass** die Polyisocyanatprepolymerzusammensetzung mehr als 10 Gew.-%, bezogen auf die Komponenten a) bis f), Flammschutzmittel enthält.

7. Druckbehälter, enthaltend eine lagerstabile Polyisocyanatprepolymerzusammensetzung nach einem der Ansprüche 1 bis 6.

8. Flammgeschützter Polyurethanschaum, erhältlich durch in Kontakt bringen einer Polyisocyanatprepolymerzusammensetzung nach einem der Ansprüche 1 bis 6 mit Wasser.
